# EUROPÄISCHE PATENTSCHRIFT

(11) **EP 0 403 984 B1**
(45) Veröffentlichungstag und Bekanntmachung des Hinweises auf die Patenterteilung: **01.06.1994**
(21) Anmeldenummer: 90111372.0
(22) Anmeldetag: 16.06.1990
(51) Int. Cl.: B01J 31/06, B01J 23/84, B01D 53/36

(54) **Trägerkatalysator zur Zersetzung von Ozon**
Supported catalyst for ozone decomposition
Catalyseur supporté pour la décomposition d'ozone

(30) Priorität: 22.06.1989 DE 3920428
(43) Veröffentlichungstag der Anmeldung: 27.12.1990
(73) Patentinhaber: SOLVAY CATALYSTS GmbH, D-30173 Hannover (DE)
(72) Erfinder: Falke, Holger, D-3005 Hemmingen 1 (DE); Strauss, Günther, D-3000 Hannover (DE)
(74) Vertreter: Lauer, Dieter, Dr.

(56) Entgegenhaltungen:
- EP-A- 0 038 224
- DE-A- 3 522 287
- GB-A- 1 505 843
- US-A- 4 207 291
- DATABASE WPIL, Nr. 83-50312K (21), Derwent Publications Ltd, London, GB; & JP-A-58 64 135 (MITSUBISHI)
- DATABASE WPIL, Nr. 90-49506 (07), Derwent Publications Ltd, London, GB; & JP-A-2 4454 (NIPPON SHOKUBAI KAGAKU)

## Beschreibung

Die Erfindung betrifft einen Trägerkatalysator zur Zersetzung von Ozon in Gasen bei Temperaturen unterhalb von etwa 50 °C, Verfahren zu seiner Herstellung und Verfahren zur Zersetzung von Ozon unter Verwendung des Polymerschaum-Trägerkatalysators.

Ozon, ein aus drei Sauerstoffatomen zusammengesetztes Molekül, wird in großtechnischen Verfahren verwendet und dient beispielsweise als Bleichmittel für öle, Fasern oder Papier, zur Entkeimung von Schwimmbadwasser und zur Reinigung technischer Abwässer, Es bildet sich auch unerwünschterweise bei der Einwirkung von ionisierender oder UV-Strahlung auf Luftsauerstoff, z,B. in der Nähe von Elektronenstrahlquellen, beispielsweise in Kapiergeräten oder in der Umgebung von Quecksilber-Quarzlampen oder Höhensonnen, Ferner tritt es in der Natur auf, beispielsweise in der Stratosphäre, aber auch am Erdboden, insbesondere in "Smog"-Wetterlagen.

Ozon ist äußerst giftig und auch sehr reaktiv, Der Ozongehalt in der Abluft technischer Anlagen, beispielsweise in der Abluft, die bei der ölraffination oder bei der Entkeimung von Wasser oder Abwasser anfällt, sollte aus Umweltschutzgründen nach Möglichkeit verringert werden. Natürlich ist Ozon auch in der Atemluft, beispielsweise in der der Stratosphäre entnommenen Frischluft für die Versorgung hochfliegender Flugzeuge oder in Erdbodennähe bei entsprechenden Wetterlagen, aus gesundheitlichen Gründen sehr problematisch. Die wünschenswerte Zersetzung des Ozons in technischen Abgasen oder Atemluft erfolgt vornehmlich katalytisch. Viele Metalle, besonders Platingruppen-Metalle, z.B. Palladium oder Platin, sowie Metalloxide, beispielsweise Übergangsmetalloxide, sind in reiner Form oder als Gemisch als katalyrisch aktive Komponente in Katalysatoren, beispielsweise in Form von Schüttgut-Trägerkatalysatoren, zur Zersetzung von Ozon angewendet worden. Sehr gut geeignet sind gemischte Metalloxide, hierbei besonders Mischungen, die Mangandioxid und Kupferoxid enthalten und unter dem Namen Hopcalit bekannt geworden sind. Hopcalite können beispielsweise aus Mangandioxid und Kupferovid bestehen, sie können aber auch noch weitere Metalloxide, z.B. Nickeloxid, Kobaltoxid, Silberoxid sowie gewünschtenfalls Promotoren wie Lithiumoxid und/oder Kaliumoxid enthalten.

Die EP-A-0 038 224 beschreibt ein Kompositmaterial zur Ozonzersetzung, bei welchem Hopkalit als katalytisch aktive Komponente auf der Oberfläche von Kunststoffträgerteilchen aufgebracht ist. Dabei geht jener Katalysator von handelsüblichen Trägerteilchen mit einem Durchmesser von 3 bis 3,5 mm aus, die vor der Aufbringung der katalytisch aktiven Substanz auf eine durchschnittliche Größe von 1 bis 2 mm zerkleinert werden.

Aufgabe der Erfindung war es, neue Trägerkatalysatoren mit vorteilhaften Eigenschaften zur Zersetzung von Ozon zur Verfügung zu stellen.

Diese Aufgabe wird durch die erfindungsgemäßen Trägerkatalysatoren gelöst.

Der erfindungsgemäße Trägerkatalysator zur Zersetzung von Ozon in Gasen bei Temperaturen unterhalb von etwa 50 °C, umfassend ein Trägermaterial und eine katalytisch aktive Komponente, welche ein oder mehrere Metalle und/oder ein oder mehrere Metalloxide enthält, ist dadurch gekennzeichnet, daß das Trägermaterial ein geschäumtes, im wesentlichen offenporiges organisches Polymer mit einem Raumvolumen von 5 cm³ und mehr ist, welches mit der katalytisch aktiven Komponente beschichtet ist, wobei die katalytisch aktive Komponente in Partikeln mit einer Größe von 10 bis 500 µm vorliegt.

Prinzipiell sind alle bekannten, geschäumten, im wesentlichen offenporigen organischen Polymere als Träger im Rahmen der vorliegenden Erfindung verwendbar. Eine Vielzahl solcher Polymere mit unterschiedlichen Eigenschaften sind dem Fachmann bekannt.

Beispielsweise können geschäumte Polymere (Schaumstoffe) ganz unterschiedlicher Härte, von Weichschäumen bis hin zu Hartschäumen, verwendet werden.

Die Porengröße kann im Bereich von 0,1 bis 10 mm liegen, das spezifische Gewicht zwischen 0,005 und 0,05 g/cm³.

Von entscheidender Wichtigkeit ist es, daß man als Träger ein im wesentlichen offenporiges organisches Polymer verwendet. Poren sind Hohlräume im jeweiligen Polymer. Hierbei stehen offene Poren mit dem umgebendem Medium in Verbindung, während geschlossene Poren in sich abgeschlossen sind und kein Medium eindringen lassen. Der Begriff "offenporig" steht im Rahmen der vorliegenden Erfindung für solche Poren, die über Öffnungen in der Porenwand mit anderen Poren und auf diese Weise schließlich mit dem umgebenden Medium, beispielsweise Luft, in Verbindung stehen.

Als durchströmtes Katalysatorträgermaterial eignen sich geschäumte Polymere natürlich um so besser, je höher der Anteil an offenen Poren im Polymer ist. Zwar kann in der vorliegenden Erfindung prinzipiell auch ein Polymer als Katalysatorträger verwendet werden, welches neben offenen Poren auch einen größeren Anteil geschlossener Poren aufweist und somit gemischtporig ist. Die geringere wirksame Oberfläche und der höhere Druckabfall lassen die Verwendung einen solchen Polymers jedoch als wenig zweckmäßig erscheinen. Im Rahmen der vorliegenden Erfindung kommen deshalb im wesentlichen offenporige Polymere als Träger zur Anwendung. Der Begriff "im wesentlichen offenporig" bedeutet in diesem Zusammenhang, daß ein wesentlicher Anteil, beispielsweise etwa 90 % und mehr, vorzugsweise 95 bis etwa 100 %, der im Polymer enthaltenen Poren offenporig sein soll.

Es ist bekannt, daß geschäumte Polymere je nach Art ihrer Herstellung geschlossenporig, gemischtporig oder offenporig anfallen (nach einer anderen Bezeichnungsweise nennt man diese Schäume auch geschlossenzellig, gemischtzellig und offenzellig). Es ist auch bekannt, daß man gegebenenfalls vorhandene geschlossene Poren durch chemische oder physikalische Methoden in offene Poren umwandeln kann. Dieser Vorgang wird als Retikulieren bezeichnet. Im Rahmen der vorliegenden Erfindung können unmittelbar bei der Herstellung im wesentlichen offenporig anfallende, im wesentlichen offenporige geschäumte Polymere gleichermaßen verwendet werden. Gleichermaßen können im wesentlichen offenporige, geschäumte Polymere verwendet werden, die bei der Herstellung zunächst geschlossenporig oder gemischtporig anfallen und dann retikuliert werden.

Eine Vielzahl geschäumter, im wesentlichen offenporiger Polymere aus verschiedensten chemischen Materialien sind dem Fachmann bekannt und können in dem erfindungsgemäßen Trägerkatalysatoren zur Anwendung kommen. Gut geeignet sind beispielsweise Polymere auf Basis von Polystyrol, Styrolcopolymeren, Polyvinylchlorid oder Polyurethan sowie Polychloropren, weil sie gegenüber Ozon besonders resistent sind und deshalb auch für den Dauereinsatz verwendet werden können.

Sehr gut geeignet sind geschäumte, im wesentlichen offenporige organische Polymere auf Polyurethanbasis. Diese sind in Form weicher bis hin zu harten Schaumstoffen erhältlich und können in bekannter Weise aus Isocyanaten und Wasser, Carbonsäuren, Diolen, Glykoläthern, Polyolen sowie gewünschtenfalls in Anwesenheit von Treibgasen, Emulgatoren und anderen Hilfsstoffen hergestellt werden.

Die katalytisch aktive Komponente liegt im erfindungsgemäßen Trägerkatalysator zweckmäßig in einer Menge von 5 Gew.-% bis 95 Gew.-%, vorzugsweise 20 Gew.-% bis 90 Gew.-%. insbesondere 50 bis 90 Gew.-%, bezogen auf das Gesamtgewicht des Trägerkatalysators, vor. Ist sie in geringeren als den angebenen Mengen vorhanden, sinkt der Umsetzgrad der Ozonzersetzung auf ein zu geringes Maß ab, wird sie in größeren als den angebenen Mengen eingesetzt, wird die katalytisch aktive Komponente möglicherweise nicht effektiv ausgenutzt.

Als katalytisch aktive Komponente können alle Metalle, insbesondere Edelmetalle, beispielsweise Platingruppenmetalle wie Palladium oder Platin, und Metalloxide, insbesondere Übergangsmetalloxide, wie Mangandioxid, Kobaltoxid, Kupferoxid, Nickeloxid, verwendet werden. Man kann ein reines Metall oder Gemische mehrerer Metalle und/oder ein Metalloxid oder ein Gemisch mehrerer Metalloxide verwenden. Hierbei sind natürlich auch Kombinationen von Metallen mit Metalloxiden verwendbar.

Bevorzugte erfindungsgemäße Trägerkatalysatoren umfassen im wesentlichen offenporige, geschäumte Polymere, beschichtet mit Hopcalit als katalytisch aktiver Komponente. Hopcalite sind Oxidgemische, calciniert bei Temperaturen von 300 °C und mehr, welche entweder aus Mangandioxid und Kupferoxid bestehen oder einen wesentlichen Gehalt von Mangandioxid und Kupferoxid in Verbindung mit weiteren Oxiden, beispielsweise Trikobalttetraoxid, Silberoxid, Nickeloxid, Aluminiumoxid, Ceroxid, Lithiumoxid und/oder Kaliumoxid, enthalten. Gut geeignet als katalytisch aktive Beschichtung ist des von der Firma Kali-Chemie unter der Bezeichnung SG 2118 erhältliche Mischoxid.

Ganz besonders bevorzugt sind erfindungsgemäße Trägerkatalysatoren, welche als Trägermaterial ein Polymer auf Polyurethan-Basis, beschichtet mit einem Hopcalit als katalytisch aktiver Komponente aufweisen, Insbesondere bevorzugt sind Trägerkatalysatoren zur Zersetzung von Ozon in Gasen bei Temperaturen unterhalb von etwa 50 °C, welche ein geschäumtes, im wesentlichen offenporiges organisches Polymer auf Polyurethan-Basis, beschichtet mit einem Hopcalit als katalytisch aktiver Komponente in einer Menge von 5 bis 95 Gew.-%, vorzugsweise 20 bis 90 Gew.-%, insbesondere 50 bis 90 Gew.-%, bezogen auf das Gesamtgewicht des Trägerkatalysators, aufweisen.

Der erfindungsgemäße Trägerkatalysator kann prinzipiell in beliebiger Raumform vorliegen, beispielsweise monolithartig in Form von Blöcken, Platten, Matten oder Kugeln. Das Raumvolumen kann bis hin zu mehreren Litern, beispielsweise 10 und mehr Litern, reichen.

Im folgenden werden Verfahren zur Herstellung der erfindungsgemäßen Trägerkatalysatoren beschrieben.

Das erfindungsgemäße Verfahren zur Herstellung von Trägerkatalysatoren zur Zersetzung von Ozon in Gasen bei Temperaturen unterhalb von etwa 50 °C ist dadurch gekennzeichnet, daß man als Träger ein geschäumtes, im wesentlichen offenporiges organisches Polymer mit einem Raumvolumen von 5 cm³ und mehr verwendet und dieses mit einem oder mehreren, die Zersetzung von Ozon katalysierenden Metallen und/oder einem oder mehreren Metalloxiden als katalytisch aktive Komponente beschichtet, die in Partikeln einer Größe von 10 bis 500 µm vorliegt.

Prinzipiell kann man im erfindungsgemäßen Verfahren zur Herstellung der Trägerkatalysatoren alle bekannten geschäumten, im wesentlichen offenporigen organischen Polymere verwenden, wie sie bereits vorstehend beschrieben wurden. Bevorzugt verwendet man im erfindungsgemäßen Verfahren Polymere auf Polyurethan-Basis, Polyvinylchlorid, Polystyrol oder Polychloropren. Besonders bevorzugt verwendet man im erfindungsgemäßen Verfahren Polymere auf Polyurethan-Basis als Träger.

Gut geeignet sind Schäume mit einer Porengröße von 0,1 bis 10 mm, und einer Dichte des Schaums von 0,005 bis 0,05 g/cm³.

Im Rahmen der folgenden Erfindung kann man geschäumte Polymere von prinzipiell beliebiger Raumform verwenden. Beispielsweise sind Polymere in Form von Blöcken, Platten, Matten oder Kugeln in beliebiger Dimension, mit einem Raumvolumen von 5 cm³ bis hin zu mehreren Litern, beispielsweise 10 und mehr Litern, verwendbar.

Als katalytisch aktive Komponente, mit welcher der verwendete Träger im erfindungsgemäßen Verfahren beschichtet wird, können prinzipiell alle Metalle oder Metalloxide, die bekanntermaßen Ozon katalytisch zersetzen, verwendet werden. Bevorzugt beschichtet man die Träger mit einer katalytisch aktiven Komponente, welche ein Platingruppenmetall oder ein Gemisch mehrerer Platingruppenmetalle, z.B. Platin und/oder Palladium und/oder ein Übergangsmetalloxid oder ein Gemisch mehrerer Übergangsmetalloxide enthält, Besonders bevorzugt beschichtet man die Träger mit gemischten Übergangsmetalloxiden, insbesondere mit Hopcaliten. Hopcalite sind Metalloxidgemische, welche entweder aus Mangandioxid und Kupferoxid bestehen oder Mangandioxid und Kupferoxid neben weiteren Oxiden, z.B. Nickeloxid, Kobaltoxid, Silberoxid sowie weitere Metalloxide wie Aluminiumoxid, Ceroxid, Lithiumoxid und/oder Kaliumoxid enthalten.

Hopcalite verschiedener Zusammensetzung sind dem Fachmann bekannt, nach bekannten Methoden erhältlich und als katalytisch aktive Komponente im Verfahren verwendbar. Ein gut geeignetes Metalloxidgemisch ist von der Firma Kali-Chemie unter der Bezeichnung SG 2118 erhältlich.

Das Trägermaterial kann nach an sich bekannten Methoden mit der katalytisch aktive Komponente beschichtet werden, beispielsweise durch Kontaktieren des Trägers mit einer Aufschlämmung der Komponente in Wasser und anschließendes Trocknen.

Vorzugsweise beschichtet man den Träger mit einer trockenen, pulverförmig vorliegenden katalytisch aktiven Komponente. Die katalytisch aktive Komponente liegt in Partikeln mit einer Größe von 10 bis 500 µ vor. Auf derartige Partikelgrößen kann die katalytisch aktive Komponente beispielsweise in Kugelmühlen gebracht werden.

Häufig ist die Beschichtung durch Kontaktieren von Träger und aktiver Komponente ohne jede Vorbehandlung möglich, beispielsweise durch Schütteln in Vibratorgefäßen. Beispielsweise kann man die sehr gut zur Zersetzung von Ozon in Gasen geeigneten erfindungsgemäßen Trägerkatalysatoren, welche als geschäumtes, im wesentlichen offenporiges Polymer ein Polymer auf Polyurethan-Basis und als katalytisch aktive Komponente ein Hopcalit umfassen, auf einfache Weise dadurch herstellen, daß man den Träger mit dem feinpulverisierten Hopcalit ohne weitere Vorbehandlung zur Beschichtung kontaktiert, beispielsweise in Schüttelvorrichtungen, Vibratorgefäßen oder rotierenden Trommeln.

Gewünschtenfalls kann man Träger und/oder katalytisch aktive Komponente auch einer Vorbehandlung unterziehen, um die Haftung der katalytisch aktiven Komponente auf der Oberfläche des geschäumten offenporigen Polymers zu verbessern. Beispielsweise kann man die katalytisch aktive Komponente aufheizen, beispielsweise auf Temperaturen von 150 bis 200 °C, und dann mit dem nicht vorbehandelten Träger in Kontakt bringen, Das erhitzte Pulver weicht die Oberfläche des Polymers an und haftet infolgedessen.

Weiterhin besteht die Möglichkeit, den Träger einer Vorbehandlung zu unterziehen. Beispielsweise kann man den Träger einer thermischen Vorbehandlung unterwerfen, den Träger mit einem die Oberfläche anlösenden Lösungsmittel kontaktieren oder (möglichst dünn) mit einem Klebemittel beschichten.

Im Verfahren zur Herstellung der erfindungsgemäßen Trägerkatalysator bringt man die katalytisch aktive Komponente in einer Menge von 5 bis 95 Gew.-%, vorzugsweise 20 bis 90 Gew,-%, insbesondere 50 bis 90 Gew -%, bezogen auf das Gesamtgewicht des Trägerkatalysators, auf. Gewünschtenfalls kann man den Vorgang des Aufbringens so oft wiederholen, bis die aktive Komponente in der gewünschten Menge aufgetragen ist.

In einer ganz besonders bevorzugten Ausführungsform des erfindungsgemäßen Verfahrens verwendet man als Träger ein geschäumtes, im wesentlichen offenporiges organisches Polymer auf Polyurethan-Basis und beschichtet es ohne Vorbehandlung mit einem Hopcalit in einer Menge von 5 bis 95 Gew,-%, vorzugsweise 20 bis 90 Gew.-%, insbesondere 50 bis 90 Gew,-%, bezogen auf das Gesamtgewicht des Trägerkatalysators.

Überraschenderweise erwiesen sich die erfindungsgemäßen Trägerkatalysatoren als verwendbar für die Zersetzung von Ozon in Gasen bei Temperaturen unterhalb von etwa 50 °C. Ein weiterer Gegenstand der Erfindung ist ein Verfahren zur katalytischen Zersetzung von Ozon in Gasen bei Temperaturen unterhalb von etwa 50 °C, wobei man ein Ozon enthaltendes Gas durch einen der vorstehend beschriebenen, erfindungsgemäßen Trägerkatalysatoren leitet. Vorzugsweise führt man das Verfahren zur katalytischen Zersetzung von Ozon in Gasen bei Temperaturen zwischen etwa 10 und etwa 25 °C durch.

Der Ozongehalt des Gases kann bis zu 2 Gew.-% betragen. Das Verfahren eignet sich beispielsweise sehr gut für Gase mit einem Ozongehalt im Bereich von etwa 0,1 bis 1,5 Gew.-%.

Bei dem zu reinigenden Gas handelt es sich bevorzugt um Ozon enthaltende Luft. Die relative Feuchte kann zwischen 0 bis hin zu über 90 % betragen.

Ihre Anwendung finden die erfindungsgemäßen Trägerkatalysatoren zur Aufbereitung der Abluft von technischen Anlagen, zur Aufbereitung von Atemluft, zur Zersetzung von Ozon in Kopiergeräten, in Luftversorgungssystemen von Flugzeugen etc.

Die erfindungsgemäßen Trägerkatalysatoren weisen überraschende Vorteile auf. Beispielsweise sind sie bei Umgebungstemperatur aktiv, sie gestatten eine ökonomische Ausnutzung der katalytisch aktiven Komponente, sie sind gut handhabbar, sie sind sehr leicht, können an Ort und Stelle auf die gewünschte Dimension zurechtgeschnitten werden, sind stabil gegenüber Schlag oder Stoß und können auf sehr einfache Art hergestellt werden.

Das folgende Beispiel soll die Erfindung weiter erläutern, ohne sie in ihrem Umfang einzuschränken.

### Ausführungsbeispiel:

### 1.1 Herstellung des erfindungsgemäßen Trägerkatalysators.

Als Träger wurde ein geschäumtes, offenporiges Polymer auf Polyurethan-Basis mit einer Porengröße von 0,5 mm und einer Dichte von 0,02 g/cm³ in Form eines Blocks verwendet, Die Ausmaße des verwendeten Blockes betrugen 4 x 4 x 2 cm.
Als katalytisch aktive Komponente wurde das unter der Bezeichnung SG 2118 erhältliche Mischoxid, ein Mangandioxid-Kupferoxid-Gemisch mit Binder, der Firma Kali-Chemie eingesetzt. Das Mischoxid, ein MangandioxidKupferoxid-Gemisch mit Binder, wurde vor seiner Verwendung in einer Kugelmühle auf eine Teilchengröße von 50 bis 100 µ zerkleinert. Zur Beschichtung ließ man ohne Vorbehandlung von Träger oder katalytisch aktivem Material das Mischoxid unter Schütteln durch die Poren des Trägermaterials rieseln, bis etwa 5,3 g der aktiven Komponente je Gramm Trägermaterial aufgebracht waren. Der gebrauchsfertige, beschichtete Trägerkatalysator enthielt 3,4 g des katalytisch aktiven Mischoxids.

### 1.2 Anwendung des erfindungsgemäßen Trägerkatalysators zur Zersetzung von Ozon

Der in Beispiel 1.1. hergestellte Trägerkatalysator wurde in einem Rohrreaktor mit Gaszuführung und Gasableitung eingebracht. Luft mit einer relativen Feuchte von 90 % und einem Ozongehalt von 16 g pro m³ Gas wurde bei Umgebungstemperatur (etwa 25 °C) in einem Volumenstrom von 125 l/h durch den erfindungsgemäßen Trägerkatalysator geleitet. Nach dem Passieren des erfindungsgemäßen Trägerkatalysators betrug der Ozongehalt in der Luft noch etwa 2 g/m³ . Der Umsatzgrad betrug somit 87 %.

## Patentansprüche

1. Trägerkatalysator zur Zersetzung von Ozon in Gasen bei Temperaturen unterhalb von etwa 50 °C, umfassend ein Trägermaterial und eine katalytisch aktive Komponente, welche ein oder mehrere Metalle und/oder ein oder mehrere Metalloxide enthält, dadurch gekennzeichnet, daß das Trägermaterial ein geschäumtes, im wesentlichen offenporiges organisches Polymer mit einem Raumvolumen von 5 cm³ und mehr ist, welches mit der katalytisch aktiven Komponente beschichtet ist, wobei die katalytisch aktive Komponente in Partikeln mit einer Größe von 10 bis 500 µm vorliegt.

2. Trägerkatalysator nach Anspruch 1, dadurch gekennzeichnet, daß das geschäumte, organische Polymer ein Polymer auf Polyurethan-Basis ist.

3. Trägerkatalysator nach Anspruch 1 oder 2, dadurch gekennzeichnet, daß die katalytisch aktive Komponente in einer Menge von 5 bis 95 Gew.-%, bezogen auf das Gesamtgewicht des Trägerkatalysators, enthalten ist.

4. Trägerkatalysator nach einem der vorhergehenden Ansprüche, dadurch gekennzeichnet, daß das Trägermaterial mit Hopcalit als katalytisch aktiver Komponente beschichtet ist.

5. Verfahren zur Herstellung von Trägerkatalysatoren zur Zersetzung von Ozon in Gasen bei Temperaturen unterhalb von etwa 50 °C, dadurch gekennzeichnet, daß man als Träger ein geschäumtes, im wesentlichen offenporiges organisches Polymer mit einem Raumvolumen von 5 cm³ und mehr verwendet und dieses mit einem oder mehreren, die Zersetzung von Ozon katalysierenden Metallen und/oder einem oder mehreren Metalloxiden als katalytisch aktive Komponente beschichtet, die in Partikeln einer Größe von 10 bis 500 µm vorliegt.

6. Verfahren nach Anspruch 5 oder 6, dadurch gekennzeichnet, daß man als Träger ein Polymer auf Polyurethan-Basis verwendet.

7. Verfahren nach den Ansprüchen 5 bis 7, dadurch gekennzeichnet, daß man die katalytisch aktive Komponente in einer Menge von 5 bis 95 Gew.-%, bezogen auf das Gesamtgewicht des Trägerkatalysators, aufbringt.

8. Verfahren nach den Ansprüchen 5 bis 8, dadurch gekennzeichnet, daß man als katalytisch aktive Komponente Hopcalit verwendet.

9. Verfahren zur katalytischen Zersetzung von Ozon, dadurch gekennzeichnet, daß man ein Ozon enthaltendes Gas über einen Trägerkatalysator nach den Ansprüchen 1 bis 4 leitet.

10. Verfahren nach Anspruch 9, dadurch gekennzeichnet, daß man als Gas Ozon enthaltende Luft einsetzt.

## Claims

1. A supported catalyst for the decomposition of ozone in gases at temperatures below about 50°C, comprising a support material and a catalytically active component which contains one or more metals and/or one or more metal oxides, characterised in that the support material is a foamed, substantially open-pored organic polymer having a spatial volume of 5 cm³ and more which is coated with the catalytically active component, the catalytically active component being present in particles having a size of 10 to 500 µm.

2. A supported catalyst according to Claim 1, characterised in that the foamed, organic polymer is a polymer on a polyurethane basis.

3. A supported catalyst according to Claim 1 or 2, characterised in that the catalytically active component is contained in a quantity of 5 to 95% by weight, relative to the total weight of the supported catalyst.

4. A supported catalyst according to one of the preceding Claims, characterised in that the support material is coated with hopcalite as the catalytically active component.

5. A method for producing supported catalysts for the decomposition of ozone in gases at temperatures below about 50°C, characterised in that a foamed, substantially open-pored organic polymer having a spatial volume of 5 cm³ and more is used as the support and it is coated with one or more metals which catalyse the decomposition of ozone and/or one or more metal oxides as the catalytically active component which is present in particles having a size of 10 to 500 µm.

6. A method according to Claim 5, characterised in that a polymer on a polyurethane basis is used as the support.

7. A method according to Claims 5 or 6, characterised in that the catalytically active component is applied in a quantity of 5 to 95% by weight, relative to the total weight of the supported catalyst.

8. A method according to Claims 5 to 7, characterised in that hopcalite is used as the catalytically active component.

9. A method for the catalytic decomposition of ozone, characterised in that an ozone-containing gas is passed through a supported catalyst according to Claims 1 to 4.

10. A method according to Claim 9, characterised in that ozone-containing air is used as the gas.

## Revendications

1. Support catalytique pour la décomposition de l'ozone dans des gaz à des températures inférieures à environ 50°C, comprenant un matériau de support et un composant catalytique actif, qui contient un ou plusieurs métaux et/ou un ou plusieurs oxydes métalliques, caractérisé en ce que le matériau de support est un polymère organique alvéolaire à pores sensiblement ouverts, avec un volume spatial de 5 cm³ et plus, qui est revêtu du composant catalytique actif, le composant catalytique actif étant présent sous la forme de particules d'un calibre de 10 à 500 micromètres.

2. Support catalytique selon la revendication 1, caractérisé en ce que le polymère alvéolaire organique est un polymère à base de polyuréthane.

3. Support catalytique selon la revendication 1 ou 2, caractérisé en ce que le composant catalytique actif est présent à raison de 5 à 95% en poids sur base du poids total du support catalytique.

4. Support catalytique selon l'une quelconque des revendications précédentes, caractérisé en ce que le matériau de support est revêtu d'hopcalite comme composant catalytique actif.

5. Procédé de fabrication de supports catalytiques pour décomposer l'ozone dans des gaz à des températures inférieures à environ 50°C, caractérisé en ce que l'on utilise comme support un polymère organique alvéolaire à pores sensiblement ouverts, avec un volume spatial de 5 cm³ et plus et l'on revêt celui-ci d'un ou plusieurs métaux catalysant la décomposition de l'ozone et/ou d'un ou plusieurs oxydes métalliques comme composant catalytique actif, qui se présente sous la forme de particules d'un calibre de 10 à 500 micromètres.

6. Procédé selon la revendication 5, caractérisé en ce que l'on utilise comme support un polymère à base de polyuréthane.

7. Procédé selon les revendications 5 à 6, caractérisé en ce que l'on applique le composant catalytique actif à raison de 5 à 95% en poids sur base du poids total du support catalytique.

8. Procédé selon les revendications 5 à 7, caractérisé en ce que l'on utilise de l'hopcalite à titre de composant catalytique actif.

9. Procédé de décomposition catalytique de l'ozone, caractérisé en ce qu'un gaz contenant de l'ozone est acheminé sur un support catalytique selon les revendications 1 à 4.

10. Procédé selon la revendication 9, caractérisé en ce que l'on met en oeuvre comme gaz de l'air contenant de l'ozone.
